# EUROPEAN PATENT APPLICATION

(11) **EP 4 825 506 A1**
(43) Date of publication of application: **21.10.2026**
(21) Application number: 26172594.9
(22) Date of filing: 15.04.2026
(51) Int. Cl.: B21D 43/28, B21D 45/10, B23K 26/70, B23K 37/00

(54) **APPARATUS AND SYSTEM FOR RELEASING WORK PIECES FROM A SHEET OF METAL**

(30) Priority: 16.04.2025 NL 4000058
(71) Applicant: Gelre Metaalwaren B.V., 7141 JM Groenlo (NL)
(72) Inventor: Schuurmans, Jorik Gert Jan, Groenlo (NL); Stortelder, Teun Johannes Maria, Groenlo (NL)
(74) Representative: Dogio Patents B.V.

(57) **Abstract**

Apparatus (200; 300) for releasing work pieces from a substantially planar metal sheet (10) in which a plurality of work pieces (20, 30) have been cut in such a manner that the work pieces remain attached to a main portion of the sheet by one or more respective connecting bridge portions (22,24; 32), the apparatus comprising:
a frame (210; 310);
an impacting device (250; 350) adapted for supporting a metal sheet thereon and for simultaneously impacting several spaced apart points on a lower surface of the metal sheet, wherein the impacting device comprises a plurality of spaced apart impacting elements (251 - 254; 351, 352), each impacting element comprising a plurality of protrusions, wherein each of the protrusions comprises a tip adapted for supporting thereon the lower surface (11) of the metal sheet (10), wherein the impacting elements are moveable relative to the frame (210; 310) between a raised position to impact the lower surface of the metal sheet and/or the cut work pieces with one or more of its tips from below during a rise, and a lowered position to allow released work pieces to fall downwards through the metal sheet between the tips of the protrusions of the impacting elements;
one or more actuators (280; 380, 385) adapted for driving movement of the impacting elements between the raised position and the lowered position.

## Description

### Field of the invention

The present invention relates to an apparatus for releasing work pieces, such as laser-cut or water-cut work pieces, from a substantially planar sheet of metal, wherein the work pieces have been cut within the sheet of metal without completely cutting the work piece from the sheet, such that each work piece remains connected to the sheet of metal via one or more bridge portion. Typically, when seen along the outer perimeter of each work piece, the bridge section(s) connecting the work piece to the metal sheet extend along less than 4% of said outer perimeter, such that each work piece remains only slightly connected to the metal sheet via the one or more bridge portions, typically less than 10 bridge portions, e.g. one or two bridge portions. The metal sheet typically has a thickness of between 1 mm and 20 mm, and an area of 0,5 m² or more, e.g. between 1m² and 8 m². The released work pieces are typically substantially planar.

The present invention further relates to a system comprising such an apparatus.

### Background of the invention

Systems are known for releasing metal work pieces from a metal sheet using a hydraulic push pin to push out a work piece. However, such systems require the exact location of each work piece relative to the push pin to be known, to avoid the pin pushing down at a wrong location and thus possibly causing damage to a work piece, the metal sheet, or the system.

From US 2016/0023368 A1 a system for releasing laser-cut work pieces from a sheet of metal is known which makes use of a vibration device, rather than push pins, for releasing work pieces from a metal sheet. The known system comprises a support structure supporting the sheet of metal; at least one bracing member connected to the support structure whereby the bracing member partially inhibits movement of the sheet of metal when the sheet of metal experiences vibrations; and a vibration device engageable with the sheet of metal. The support structure has sufficient durability to hold and carry the sheet of metal, which may have a substantial weight. The vibration device is used to induce mechanical vibrations in the sheet of metal, and may in some situations be formed integrally with the support structure itself, such that the vibrations are transferred through the support structure and into the sheet of metal. In an example of the known system, the support element is provided with a table structure, which table structure is configurable to be in a horizontal position or a non-horizontal position, such that an operator may manually rest an edge of the sheet of metal against a bracing element when the table element is in a lowered non-horizontal position. Laser-cut work pieces which have been released from the sheet of metal may slide down a chute which is arranged directly below the sheet of metal.

A drawback of the known invention is that the vibrating device has to exert a relatively large amount of force on the metal sheet in order to ensure release of the work pieces from the sheet.

It is an object of the invention to at least partially overcome this drawback.

### Summary of the invention

To this end, according to a first aspect the invention provides an apparatus for releasing work pieces from a substantially planar metal sheet in which a plurality of work pieces have been cut in such a manner that the work pieces remain attached to a main portion of the sheet by one or more respective connecting bridge portions, the apparatus comprising: a frame; an impacting device adapted for supporting a metal sheet thereon and for simultaneously impacting several spaced apart points on a lower surface of the metal sheet, wherein the impacting device comprises a plurality of spaced apart impacting elements, each impacting element comprising a plurality of protrusions, wherein each of the protrusions comprises a tip adapted for supporting thereon the lower surface of the metal sheet, wherein the impacting elements are moveable relative to the frame between a raised position to impact the lower surface of the metal sheet and/or the cut work pieces with one or more of its tips from below during a rise, and a lowered position to allow released work pieces to fall downwards through the metal sheet between the tips of the protrusions of the impacting elements; and one or more actuators adapted for driving movement of the impacting elements between the raised position and the lowered position.

A metal sheet, in which a plurality of work pieces have been cut which are still attached to the sheet via frangible bridge portions, can be placed onto some of the tips of the protrusions in such a manner that substantially the entire weight of the metal sheet is supported by several of the plurality of the impacting elements via the tips of the protrusions thereof. When actuators drive movement of the impacting elements, e.g. in a reciprocating manner, between the raised and lowered positions, the tips of the protrusions impact either the metal sheet, a work piece, or air. When one or more of the tips impacts a work piece, this is likely to cause a bridge section which connected the work piece to the metal sheet to break, in particular as the work piece typically is much lighter than the metal sheet. When compared to systems which merely vibrate the metal sheet, e.g. using a vibration device at the edges of the metal sheet, but which do not contact the work pieces, the apparatus of the present invention may thus impact several points on the lower surface of the work pieces. When the points of impact coincide with a work piece, impact is thus directly applied to the work piece, resulting in efficient release of the work piece from the sheet.

As work pieces are released from the metal sheet during operation of the device, the remaining mass of the metal sheet will reduce, resulting in a change in vibration frequency of the metal sheet. This change in frequency during operation typically further helps to break any bridge sections of work pieces that are still connected to the metal sheet. During operation of the impacting device, the metal sheet will typically move with respect to the frame, due to the impacting elements engaging the lower surface of the metal sheet. In this manner, the tips of the impacting elements may contact different positions on the lower surface of the metal sheet over time during operation of the impacting device. A suitable actuator may be an electromotor, hydraulic motor, pneumatic motor, or the like.

The protrusions of a same impacting element typically all have substantially a same height.

In an embodiment the protrusions of each impacting element are spaced substantially equidistantly along the longitudinal direction of said impacting element. Preferably the protrusions of the plurality of protrusions of each impacting element extend at an angle of between 90 and 45 degrees to the longitudinal direction of the impacting element. More preferably, the impacting element has a first length along the longitudinal direction, and when projected onto a plane normal to the longitudinal direction, the protrusions have lengths less than 20 time the first length.

In an embodiment each impacting element is an elongated impacting element comprising at least 20 spaced apart tips. Due to the large number of tips, when the impacting element is in the raised position, multiple tips of said impacting element may impact one or more work pieces and/or several points on the lower surface of the metal sheet. Preferably, the tips are spaced apart, when seen along the longitudinal direction of the impacting element, by at least 4 cm, more preferably by at least 8 cm.

In an embodiment, each impacting element has a length that is at least 40 times greater, preferably at least 80 times, than a width of the impacting element, wherein the direction of the width is normal to the length direction when seen in top view. Such a relatively small width of the impacting elements allows work pieces that are released from the metal sheet to fall downwards between the impacting elements. The width of an impacting element may for instance be in the range of 4 to 20 mm.

In an embodiment the plurality of impacting elements comprises a first group of impacting elements and a second group of impacting elements, wherein the impacting device is adapted for moving the impacting elements of the first and second group between the raised position and the lowered position in an out-of-phase fashion. Thus, when the first group of impacting elements is in the raised position, the second group is not. This allows work pieces at locations above the tips of the impacting elements of the second group to move downwards out of the plane of the metal sheet. Each group of impacting elements comprises multiple impacting elements, e.g. at least 2, but preferably at least 3, 4, 5 or more impacting elements.

Preferably, the plurality of impacting elements further comprises one or more further groups of impacting elements, wherein the impacting device is adapted for moving the impacting elements of the first, second and one or more further groups between the raised position and the lowered position in an out-of-phase fashion. For instance, the plurality of impacting elements may have three groups of impacting elements which are moved, during use of the apparatus, between the raised position and the lowered position 120 degrees out-of-phase. Alternatively, the plurality of impacting elements may have four groups of impacting elements which are adapted for intermittently moving between the raised position and the lowered position 90 degrees out-of-phase. Typically, the number of groups of impacting elements, wherein each group is out-of-phase with the other groups, is less than 6.

In an embodiment the impacting device is adapted for placing the impacting elements of the first group in the raised position while placing the impacting elements of the second group in the lowered position. This allows work pieces at locations above the tips of impacting elements of the second group to move downwards out of the plane of the metal sheet when their bridge portions have been broken. Preferably, when the plurality of impacting elements comprises two or more groups of impacting elements, the impacting device is configured such that the impacting elements of only one of these groups are in the raised position at the same time, more preferably such that the impacting elements of one of these groups are in the raised position at the same time while the impacting elements of the other groups are not in the raised position. For instance, if the plurality of impacting elements of the impacting device comprises multiple groups of impacting elements which are moved between the raised and lowered position in an out-of-phase fashion, then when impacting elements of one of these groups are in the raised position, the tips of these impacting elements will all be arranged, when seen along the vertical, at a higher position than the tips of the impacting elements of the other groups.

In an embodiment the impacting device is adapted for placing the impacting element of the first group to be in the raised position while the impacting elements of the second group are in the lowered position.

In an embodiment, when seen in projection onto a vertical plane parallel to the longitudinal direction of the impacting elements, the tips of the protrusions of the first group of impacting elements are offset with respect to the tips of the protrusions of the second group of impacting elements when the tips are arranged with their tops in a same plane. This increases the number of positions on the lower surface of the metal sheet that may be impacted by the impacting element, in particular as, during operation, the metal sheet will typically move with respect to the frame

In an embodiment, when seen in projection onto the horizontal, the protrusions of the plurality of impacting elements span an area of at least 0,5 m², preferably at least 2 m², and wherein the number of protrusions is at least 40 protrusions / m². The large number of protrusions helps to support the metal sheet, and increases the chance of a work piece being impacted by a tip of such a protrusion.

In an embodiment the metal sheet is a metal sheet or plate having a length vs. width ration of 4:1 or less, e.g. 3:1 or less, wherein the length is defined as being larger than the width. This helps to prevent the metal sheet from falling between two impacting elements.

In an embodiment, when seen in projection onto the horizontal, and preferably during operation of the impacting device, each tip of a protrusion is spaced apart by at least 4 cm from a neighbouring tip. A neighboring tip may be a tip of a protrusion of the same impacting element, or a tip of a protrusion of a neighboring impacting element. Released work pieces may thus fall between tips of two impacting elements.

In an embodiment, when the tips of the plurality of impacting elements lie in a same plane, the tips of any two neigboring impacting elements are offset from each other when seen in projection onto a vertical plane parallel to the longitudinal direction of the impacting elements. When, during operation of the impacting device, the metal sheet moves with respect to the frame it is thus more likely that different positions on the lower surface of the metal sheet will be impacted by tips of the impacting elements.

In an embodiment the apparatus further comprises at least one cam shaft comprising a shaft on which a plurality of cams is mounted, wherein each of the plurality of impacting elements is arranged on a corresponding cam of the plurality of cams, and wherein the cam shaft is adapted for, upon rotation thereof, imparting a reciprocating motion on the impacting elements. Such a cam shaft provides a convenient way for moving the impacting elements between the raised and lowered position. The one or more actuators are adapted for driving rotation of the at least one cam shaft.

In an embodiment, the apparatus comprises a first cam shaft and a second cam shaft, wherein each of the first and second cam shaft comprises a shaft on which a plurality of cams is mounted, wherein each of the impacting elements is supported at a first end on a corresponding cam of the first cam shaft, and at its second end on a corresponding cam of the second cam shaft. The cams on the first cam shaft are preferably arranged for moving the first ends of the plurality of impacting elements in such a manner that any two neighboring first ends of the plurality of impacting elements are moved between the raised and lowered position in an out-of-phase fashion. Similarly, the cams on the second cam shaft are preferably arranged for moving the second ends of the plurality of impacting elements in such a manner that any two neighboring second ends of the plurality of impacting elements are moved between the raised and lowered position in an out-of-phase fashion, e.g. out-of-phase by 90 or 120 degrees.

Preferably, the one or more actuators are adapted for driving rotation of the two cam shafts in a common direction of rotation at substantially a same rotational speed. Each cam shaft may be driven by a separate actuator of the one or more actuators, or both cam shafts may be driven by a same actuator.

In an embodiment, the cam shafts of the impacting device are adapted for imparting a see-saw motion on the impacting elements. For instance, when a cam of the first cam shaft which supports an impacting element is out-of-phase with a cam of second cam shaft which supports said impacting element, this may result in such a see-saw motion of the impacting element when the cam shafts are rotated at a same speed. Alternatively, the one or more actuators may be adapted for driving rotation of the first cam shaft and second cam shaft at different speeds, which may also result in a sea-saw motion of the impacting elements.

In an embodiment, the two cams on which an impacting element is supported are out-of-phase, e.g. by 60, 90, 120 or 180 degrees. For instance, if a cam of the first cam shaft on which an impacting element is supported at its first end points upwards, then the cam of the second cam shaft on which the same impacting element is supported at its second end may point sideways or downwards.

In an embodiment the outer surfaces of the protrusions and/or tips are provided with a rubber or plastics material. This may help to reduce the amount of noise produced by the apparatus during use. For example, the protrusions and/or tips may be coated with polyurethane.

In an embodiment the apparatus further comprises a collection surface arranged below the plurality of impacting elements for collecting work pieces that have been released from the metal sheet. The released work pieces may thus easily be collected on the collection surface. Typically, the collection surface is attached to the frame, e.g. in such a manner that it is fixed with respect to the axes of rotation of the cam shafts of the impacting device.

In an embodiment the apparatus comprises a casing, said casing being mounted on the frame and comprising one or more walls spaced around the impacting device, wherein the apparatus further comprises one or more detachable and/or moveable panels which are moveable relative to the casing between a first position in which the panels leave open one or more openings in the casing to allow a metal sheet to be placed onto the impacting device, and a second position in which the one or more detachable and/or moveable panels substantially close off said openings to reduce noise due to impact between the impacting device and the metal sheet from propagating to an area outside of said casing and panels. Thus, when the one or more detachable and/or moveable panels are in the second position, the panels and the casing together substantially completely envelop the impacting device, to dampen noise generated by the impacting device. The one or more panels and/or the casing may be provided with a sound dampening material, such as an acoustic foam or a rubber, to further improve noise reduction.

In a preferred embodiment the casing comprises a lower wall arranged below the impacting device, as well as one or more side walls, and the one or more detachable and/or moveable panels comprise an upper panel and/or a side panel such that together, when in the second position, the lower wall and one or more sidewalls of the casing, and the upper panel and/or the side panel substantially envelop the impacting device to reduce said propagation of noise due to impact between the impacting device and the metal sheet. When the apparatus comprises a detachable and/or moveable upper panel, the upper panel may be detached or moved to provide an opening through which the metal sheet can be arranged on top of the impacting device, e.g. along a direction substantially non-parallel to the plane of the metal sheet. When the apparatus comprises a detachable and/or moveable side panel, the side panel may be detached or moved to provide an opening through which the metal sheet can be moved out of in a direction substantially parallel to the plane of the metal sheet.

In an embodiment the apparatus comprises a casing mounted on the frame, the casing having an upper wall and a lower wall which are connected by one or more sidewalls, wherein the plurality of impacting elements is arranged between the upper wall and the lower wall and between the one or more sidewalls. The casing may help damping sound resulting from impact between the impacting elements and the metal sheet and/or work pieces. Typically, the upper wall and lower wall, as well as the one or more sidewalls each are substantially contiguous.

In an embodiment the sidewalls and the upper and lower wall substantially completely enclose the plurality of impacting elements, except for at an opening through which the interior of the casing is accessible for arranging the metal sheet on the plurality of impacting elements. The opening is dimensioned such that it allows a planar metal sheet of at least 0,5 m² to be inserted into the casing and onto impacting elements of the plurality of impacting elements by first moving the sheet substantially horizontally through the opening into the casing, and then lowering the sheet onto the impacting elements. Typically, the opening has an opening axis which is parallel to the longitudinal direction of the impacting elements and/or the opening is arranged proximate to one of the two distal ends of the impacting elements.

In an embodiment, the lower wall forms the collection surface for collecting work pieces that have been released from the metal sheet.

In an embodiment, the apparatus further comprises a detachable and/or moveable panel for substantially closing off the opening. During loading of the metal sheet onto the impacting device, and during unloading of the metal sheet and released work pieces, the panel does not close off the opening. However, during operation of the impacting device, the panel may be used to close off the opening to reduce the amount of noise that propagates to the surroundings.

In an embodiment, the casing and/or the one or more moveable and/or detachable panels are provided with a sound dampening material, preferably an acoustic foam or a rubber.

In an embodiment the frame comprises a base section and a rotatable section, wherein the rotatable section is rotatable over an angle relative to the base section between an substantially horizontal position, for letting the impacting elements be moved between the raised position to impact the metal sheet and/or work pieces from below to release work pieces from the metal sheet, and a rotated position for letting work pieces that have been released fall down and away from the plurality of impacting elements. The angle typically is in the range of 45 to 90 degrees, e.g. between 65 and 75 degrees, in the direction of rotation from the horizontal position to the rotated position, so that any work pieces that are caught on the protrusions may slide down from the protrusions due to gravity. To avoid the metal sheet from falling off the impacting elements as well, the metal sheet may be fixed to the frame, e.g. using a chain, cable or clamp, prior to rotating the rotatable section to the rotated position. This embodiment is particularly advantageous when the apparatus comprises a collection surface as described above, as in that case the released work piece may also slide of the collection surface..

In an embodiment the impacting device is adapted for moving the impacting elements between the raised and lowered position in such a manner that during operation of the impacting device the metal sheet is caused to move relative to the frame, preferably such that the metal sheet is caused to rotate relative to the frame around at least two orthogonal axes and/or such that the metal sheet is caused to translate relative to the frame along the vertical and optionally also along the horizontal. Thus, during use of the impacting device, the metal sheet will move relative to the frame, increasing the chance that work pieces in the metal sheet will be directly impacted by tips of the impacting elements.

According to a second aspect, the present invention provides a system comprising an apparatus according to the first aspect of the invention, wherein the system further comprises transport device adapted for loading a metal sheet onto the plurality of impacting elements, preferably wherein the transport device is adapted for moving the metal sheet in a horizontal plane, as well as for moving the metal sheet vertically. The transport device may for instance comprise a 6 degree of freedom robot which is provided with a manipulator for picking up and releasing the metal sheet. When the apparatus of the system is provided with a casing as described above, the transport device is preferably adapted for moving the metal sheet along a substantially horizontal plane into and out of the interior of the casing through the opening in the casing, and then lowering the metal sheet onto impacting elements of the plurality of impacting elements. Preferably, the transport device is further adapted for, when the work pieces have been released from the metal plate, lifting the remaining metal sheet from the impacting elements of the plurality of impacting elements, and subsequently moving the remaining metal sheet away from the impacting device.

In an embodiment the transport device comprises a manipulator comprising plurality of spaced apart elongated elements adapted for supporting a metal sheet thereon, wherein the longitudinal elements are spaced such that the plurality of spaced apart elongated elements can be moved horizontally between the plurality of impacting elements. Thus, the lower surface of the metal sheet may remain well supported by the plurality of elongated elements of the transport device while the sheet is moved towards the impacting device, and once the sheet is supported on the impacting elements of the impacting device, the plurality of elongated elements of the transport device may be moved out of the apparatus of the invention, e.g. by first lowering the plurality of elongated elements of the transport device and subsequently moving it away from the apparatus along a substantially horizontal direction. The elongated elements of the transport device typically have a length of at least 70% of the length of the elongated impacting elements.

### Brief description of the drawings

Embodiments of the invention will now be illustrated in the drawings, in which
Fig. 1 schematically shows a known metal sheet in which a plurality of work pieces have been laser cut;
Figs. 2A and 2B show an isometric view of a device according to a first embodiment of the present invention, respectively in position for releasing work pieces from a metal sheet, and a position for removing the released work pieces from the apparatus;
Fig. 2C shows a detail of the apparatus of Figs 2A and 2B, from a lower side;
Fig. 2D shows a detail of the apparatus of Figs. 2A and 2B, from a direction normal to the longitudinal direction of the impacting elements thereof;
Fig. 2E schematically shows a cross-section through the tips of the apparatus shown in Fig. 2A, through a horizontal plane;
Fig. 2F shows a detail of cam shafts of the apparatus of Figs. 2A and 2B, with two elongated impacting elements arranged thereon;
Fig. 2G and 2H show a detail of protrusions of an impacting element of a apparatus of the invention
Fig. 3A schematically shows a system according to the present invention, comprising a apparatus according to a second embodiment of the invention as well as a transport device for loading a metal sheet onto the apparatus;
Fig. 3B schematically shows a side view of the apparatus shown in Fig. 3A, in a rotated position; and
Figs. 4A-4C schematically show isometric views of another embodiment of the invention, with a casing and with moveable side panels in different positions.

### Detailed description of the invention

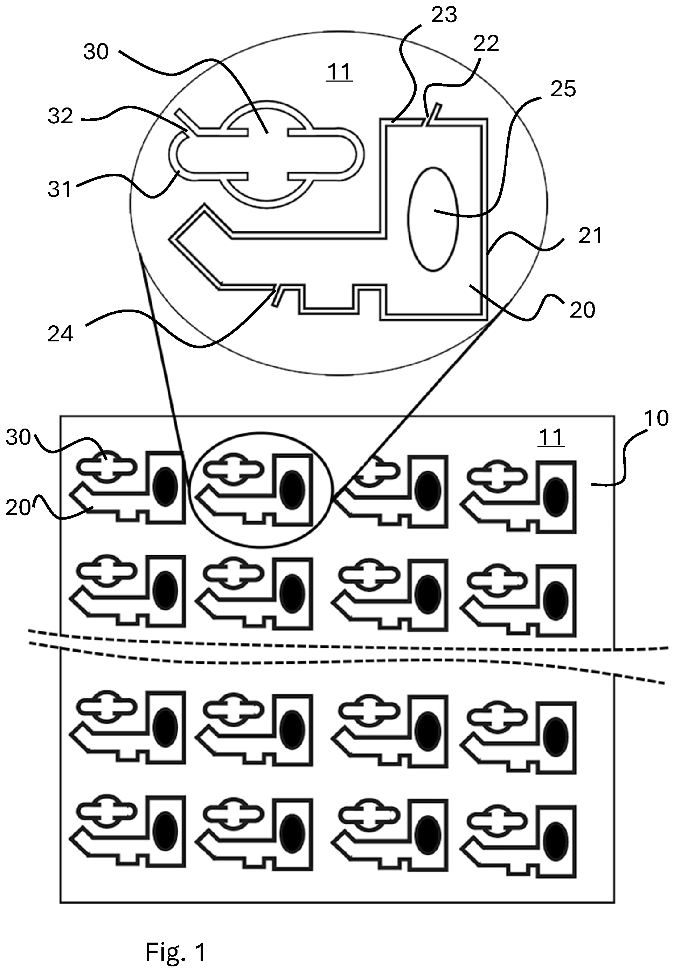

Fig. 1 schematically shows a top view of a surface 11 of a metal sheet 10, with a middle section left out for reasons of clarity. Shapes of a plurality of work pieces 20, 30 have been cut into the metal sheet 10, e.g. by stamping, water cutting or by means of a laser-cutter. Once the work pieces 20, 30 are released from the metal sheet, a main portion 12 of the sheet 10 remains. The main portion 12 typically has a weight which is several times larger than the weight of the largest work piece.

At the top of Fig. 1 a detail of two work pieces 20,30 is shown. The outer perimeter of first work piece 20 is defined by cuts 21, 23, while the first work piece remains attached to the sheet 20 at connecting bridge portions 22, 24. A through-opening 25 is provided in the work piece 20, and the metal that used to fill the through-opening 25 in the metal sheet prior to cutting is already completely removed from the sheet. The outer perimeter of second work piece 30 is defined by cut 31, while the second work piece remains attached to the sheet 20 at connecting bridge portion 32. When seen along the outer perimeter of each work piece, the bridge section(s) connecting the work piece to the metal sheet extend along less than 4% of said outer perimeter. In order to release the work pieces from the metal sheet, the metal sheet with the cut work pieces 10, 20 still attached thereto may be transferred onto an apparatus of the present invention.

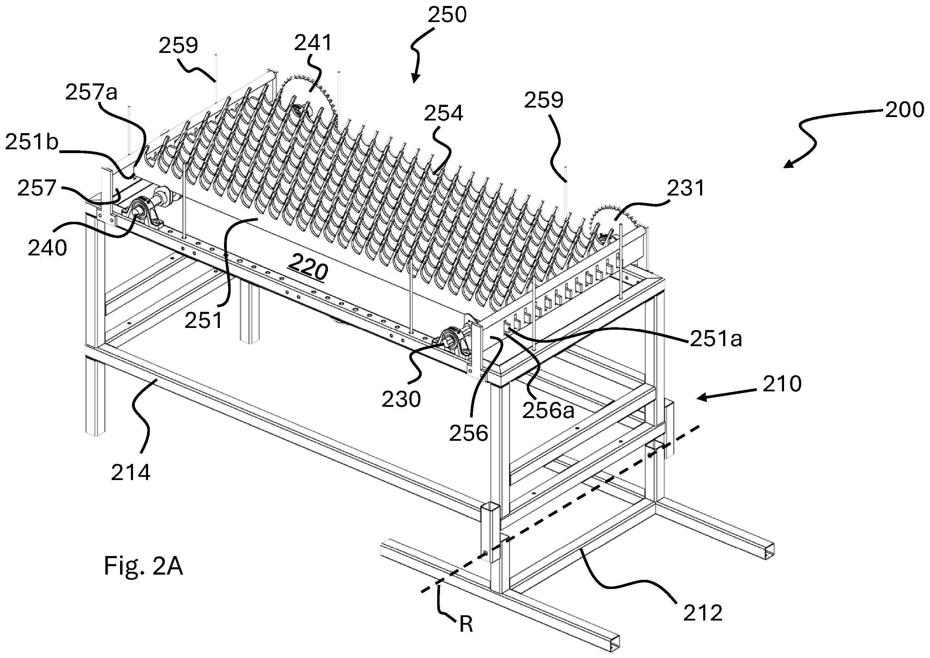

Fig. 2A schematically shows an isometric view of such an apparatus 200 according to the invention. The apparatus comprises a frame 210 which supports an impacting device 250. The impacting device 250 is adapted for supporting thereon a metal sheet, such as a metal sheet 10 of Fig. 1, and impacting a lower surface of the metal sheet in order to cause work pieces to release from the metal sheet. The impacting device 250 comprises a plurality of elongated impacting elements 251, 254 which are supported on two cam shafts 230, 240 which have parallel axes of rotation. Each of the elongated impacting elements has a longitudinal direction normal to the axes of rotation of the cam shafts 230,240.

Ends 251a, 251b of the elongated impacting elements extend into corresponding slots 256a, 257a in guide members 256, 257 which slots allow reciprocating motion of the impacting elements while preventing the impacting elements from moving out of the slots.

Operation of the impacting device 250 will cause a metal sheet supported thereby to move relative to the frame. For instance, the metal sheet may translate relative to the frame, and may slightly rotate relative to the frame. To prevent the metal sheet from sliding off the impacting elements, the apparatus 200 is provided with bracing elements 259, here in the form of metal rods. It is noted that the bracing elements are not fixed to the metal sheet, but merely limit movement of the metal sheet relative to the frame 214, without fixing the sheet to the frame. Thus, during operation of the impacting device 250, the metal sheet may move across the impacting device and relative to the frame within the bounds defined by the bracing elements 259.

In the embodiment shown, the frame 210 comprises a base section 212 and a rotatable section 214 which is rotatable relative to the base section 212 around substantially horizontal axis of rotation R. In Fig. 2A the rotatable section is shown in a first position, in which tips of at least several of the plurality of impacting elements 251, 254 lie in a substantially horizontal plane for supporting the metal sheet thereon.

Attached to the rotatable frame portion 124 at a location below the impacting device 250 is a collection surface 220. Work pieces that are released from a metal sheet that is supported on the plurality of impacting elements 251, 254, may fall in between two of the impacting elements, or may fall at a lateral side of the plurality of impacting elements, directly downwards onto the collection surface 220.

It may be the case that some of the work pieces are caught on one or more of the impacting elements. For instance, work piece 20, when released from the metal sheet, could fall down such that a protrusion of an impacting element protrudes through the through-opening 25 of the work piece, in which case the work piece will not be collected on the collection surface 220. Similarly, a work piece which has released from the metal sheet could end up being supported by one or more of the impacting elements, in which case the work piece also will not be collected on the collection surface 220.

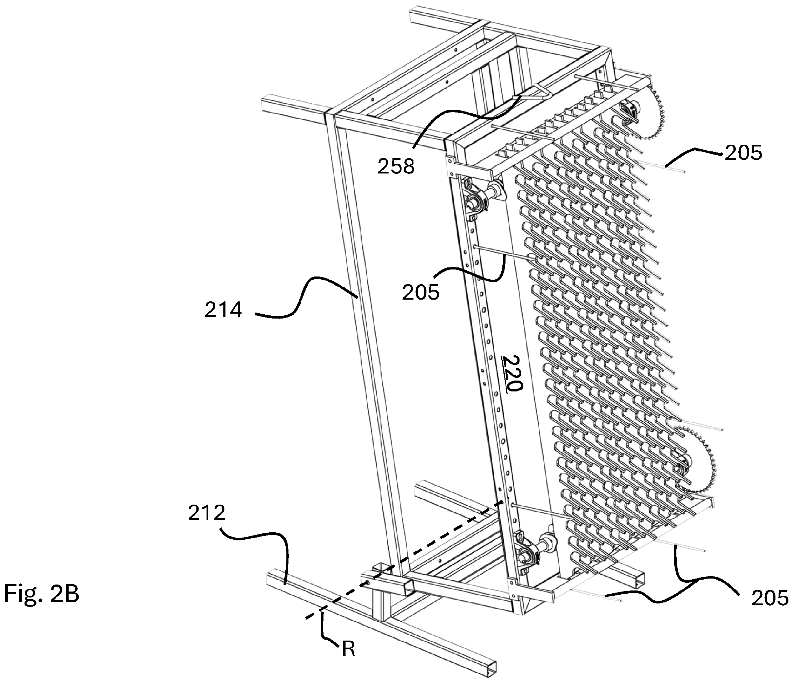

Fig. 2B shows the device 200 with the rotatable section 214, as well as the plurality of impacting elements supported thereby, rotated about 70 degrees around a horizontal axis R relative to the base section 212. In this position the distal ends of the protrusions are directed downwards, so that any work pieces having openings through which one or more of the protrusions may extend, can still fall away from the protrusions due to gravity, so that the work pieces will no longer be supported on one or more impacting elements. Bracing elements 259 prevent the metal sheet from sliding off the impacting elements, while allowing the released work pieces to pass. These bracing elements 259 also prevent the metal sheet from sliding off the impacting elements when the apparatus is in the position shown in Fig. 2A and when the impacting device is in operation.

In the embodiment shown, the rotation may be driven for instance by lifting a chain that is connected to connection point 258. Alternatively, though not shown in this embodiment, the device may comprise an actuator for driving the rotating movement between the rotatable section 214 and the base section 212.

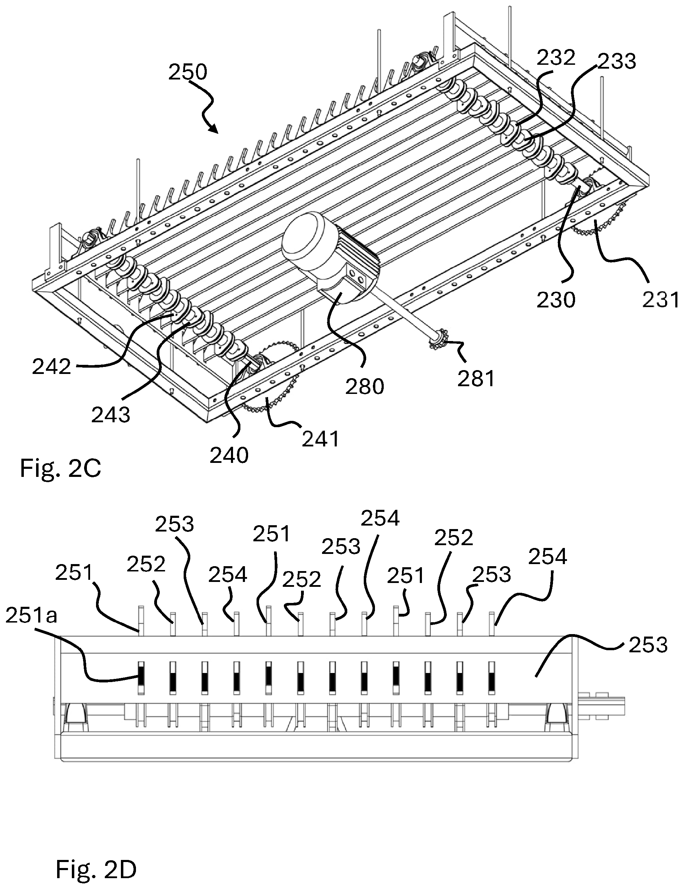

The impacting elements 251,254 and cam shafts are shown in more detail in Figs. 2C - 2F. Each of the cam shafts is connected to an actuator for driving rotation of the cam shafts, to cause a reciprocating motion of each of the plurality impacting elements.

Fig. 2C shows a bottom view of part of the device 200, in the collection tray 210 has been omitted to more clearly show the cams of the cam shafts 230, 240. Each cam on shaft 230 is out-of-phase by 90 degrees from its directly neighboring cams on the shaft, and the same applies for the cams of cam shaft 240. Rotation of both cam shafts is driven by the motor 280, which is drives a gear 281, which gear 281 connected via a chain (not shown) to gears 231 and 241 that are attached to the respective cam shafts. Both cam shafts 230, 240 thus rotate in a same direction of rotation when the motor 280 s activated. In Fig. 2C, the cams of the first cam shaft 230 and the cams of the second cam shaft which together support a same impacting element, are in phase. That is, cams 232 and 242 which together support an impacting element, both point downward at the same time.

Fig. 2D shows a partial side view of the device of Fig. 2C, which shows a first group of impacting elements 251 which are arranged on cams of the cam shafts that are in-phase, in a raised position. Fig. 2D further shows a second group of impacting elements 252, a third group of impacting elements 253 and a fourth group of impacting elements. Within each group, the impacting elements are arranged on cams of the cam shafts that are in-phase, though cams which support impacting elements of different groups are out-of-phase. As can be seen in the side view, the tips of the impacting elements 251 of the first group are all in a raised position, while the impacting elements 252, 253, 254 of the other groups are all in a lowered position. Thus, a metal sheet may be supported by the impacting elements 251 of the first group, while work pieces may fall downwards out of the metal sheet at locations above the tips of the impacting elements of the second, third and fourth group. The cams of the different groups are out of phase in such a manner that when the impacting elements of one of the groups is in the raised position, none of the impacting elements of the other groups are in the raised position.

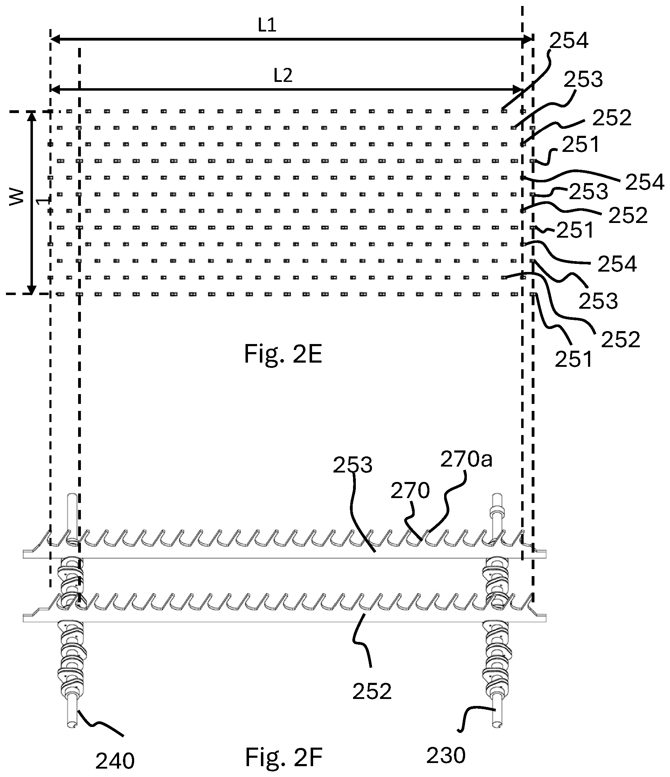

Fig. 2E schematically shows a cross-sectional view through the tips of the protrusions of the impacting elements shown in Fig. 2A in a horizontal plane. The impacting elements 251, 252, 253,254 all have protrusions with tips that are offset from the tips of the protrusions of their directly neighboring impacting elements. A convex hull spanning the tips in Fig. 2D includes more than 40 tips per m². A length L1 between the two distal tips of impacting element 254 is about 2,9 meter. The plurality of impacting elements span a distance W1, of about 0,8 meter in a direction normal to the longitudinal direction of the impacting elements. The area of the convex hull spanned by the tips in the view of Fig. 2E is about 2,3 m².

During operating of the impacting device, the metal sheet will be generally be substantially completely supported by the tips of only one of the groups of impacting elements, or by the tips of the second group of impacting elements.

Fig. 2F shows a detail of two of these impacting elements 252, 253 arranged on the cam shafts 230, 240 wherein the protrusions of impacting element 252 are offset, along the longitudinal direction, with respect to the protrusions 270 of impacting element 253. Cams of the first cam shaft 230 and 240 which support a same impacting element are in phase, so that when the cam shafts 230, 240 are rotated in a same direction and at a same speed, the impacting elements will be moved in a substantially parallelogram shaped path.

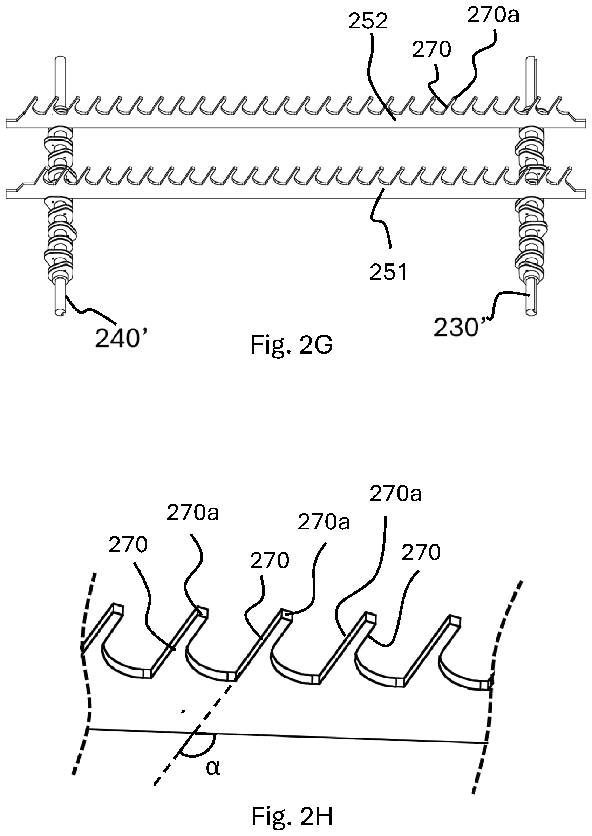

Fig. 2G shows a detail of two of the same impacting elements 252, 253 , but arranged on alternative cam shafts 230' and 240' in which cams which support a same impacting element are out-of-phase, resulting in a sea-saw motion of the impacting elements when the cam shafts 230', 240'are rotated in a same direction and at a same speed.

Fig 2H shows a detail of several of the protrusions. All of the protrusions 270 extend at an angle αof about 70 degrees to the longitudinal direction of the impacting elements, and the protrusions each have a tip 270a for contacting a lower surface of a metal sheet. The protrusions are spaced equidistantly along the length of the impacting element, and a distance between neigboring tips along the length of the impacting element is at least 4 cm. In the example, a height of the protrusions is about 8, measured in a direction normal to the longitudinal direction of the impacting element from the lowest point between two protrusions, though other heights which allow work pieces to fall between two tips are suitable as well.

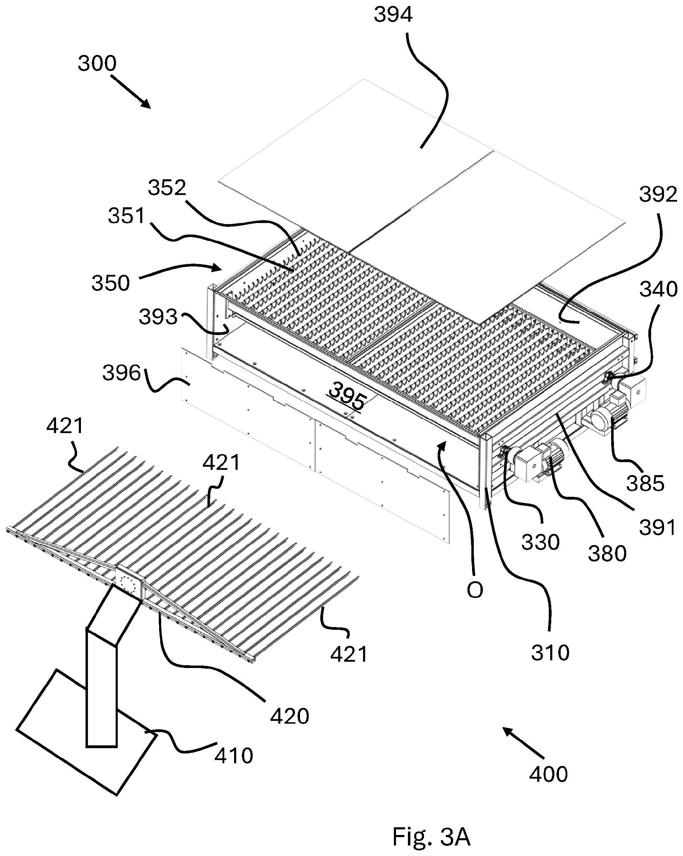

Fig. 3A schematically shows an exploded view of a system 400 which comprises an apparatus 300 according to a second embodiment of the invention. The apparatus comprises a frame 310, an impacting device 350 with a plurality of impacting elements 351, 352 that are arranged on two cam shafts 330, 340 and have ends which extend into slots, similar to the apparatus of Figs. 2A and 2B. In the embodiment of Fig. 3A, a separate electromotor 380, 385 is provided for driving rotation of each cam shaft 330, 340. Additionally, the apparatus comprises a casing comprising sidewalls 391, 392, 393, a top wall 394, a bottom wall 395 which acts as a collection tray for work pieces, and optionally a removable panel 396. Though here shown in exploded view, the top wall 394 typically is fixed to the side walls 391,392,293. When the removable panel 396 is not part of the casing, or when it is detached from the rest of the casing, a metal sheet can be inserted into the casing along a substantially horizontal plane via opening O, and subsequently be lowered onto the plurality of impacting elements. Next, the removable panel may be attached to the casing. The casing, which is typically provided with a sound dampening material, may thus be substantially closed when the impacting elements impact the metal sheet. This significantly reduces the amount of noise that people near the device are subjected to when the device is in use. Even when the optional panel 396 is not part of the casing, or is not used to close off the opening O, the casing helps reduce the amount of noise.

To facilitate loading a metal sheet into the apparatus 300, the system is provided with a transport device 410. The transport device, here shown schematically as a 6 degree of freedom robot 410, is provided with a manipulator 420 which comprises a plurality of spaced apart longitudinal elements 421 adapted for supporting a metal sheet thereon, wherein the longitudinal elements are spaced such that they can move horizontally between the plurality of impacting elements. Thus, the metal sheet can be loaded onto the longitudinal elements 421 at a location away from the apparatus. Subsequently, the transport can move the longitudinal elements and metal sheet supported thereon along a substantially horizontal plane into the apparatus, then lower the longitudinal elements such that they are arranged between the impacting elements until the metal sheet is supported by the impacting elements. Next, the longitudinal elements 421 can be moved out of the casing along a substantially horizontal plane, while the metal sheet remains supported on the impacting elements. The motors 380, 385can drive the cam shafts 330, 340 for moving the impacting elements 351, 352 between their raised and lowered positions to release work pieces from the metal sheet. The released work pieces may fall down between the impacting elements onto the bottom wall 395, which acts as a collection surface for the work pieces. Some of the work pieces may end up on the upper surface of the sheet, or supported on one or more of the impacting elements below the lower surface of the metal sheet.

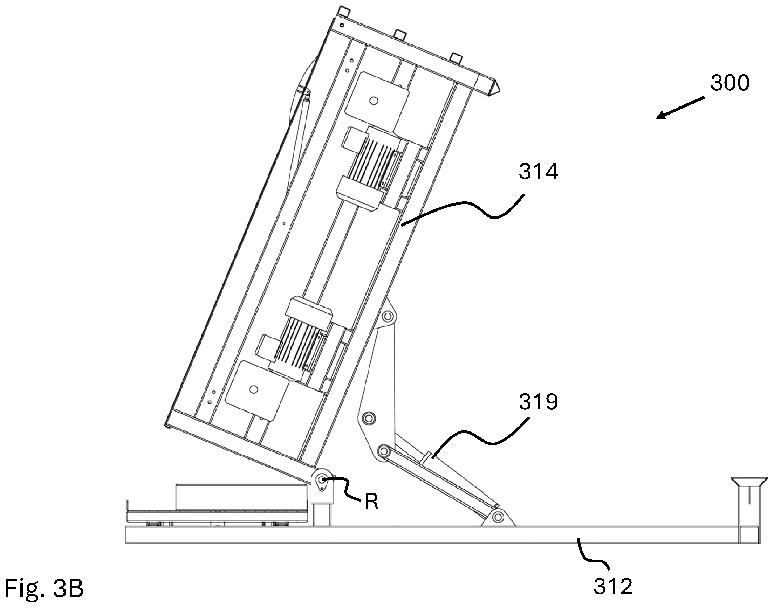

Fig. 3B shows the apparatus 300 of Fig. 3A, in which however the frame comprises both a base section 312 and a rotatable section 314. In Fig. 3B, the rotatable section is rotated by an angle of about 80 degrees around a horizontal axis R, to allow work pieces, as well as the metal sheet to move out of the casing due to gravity. The apparatus is further provided with a hydraulic cylinder 319 to drive the rotation between the horizontal position and the rotated position.

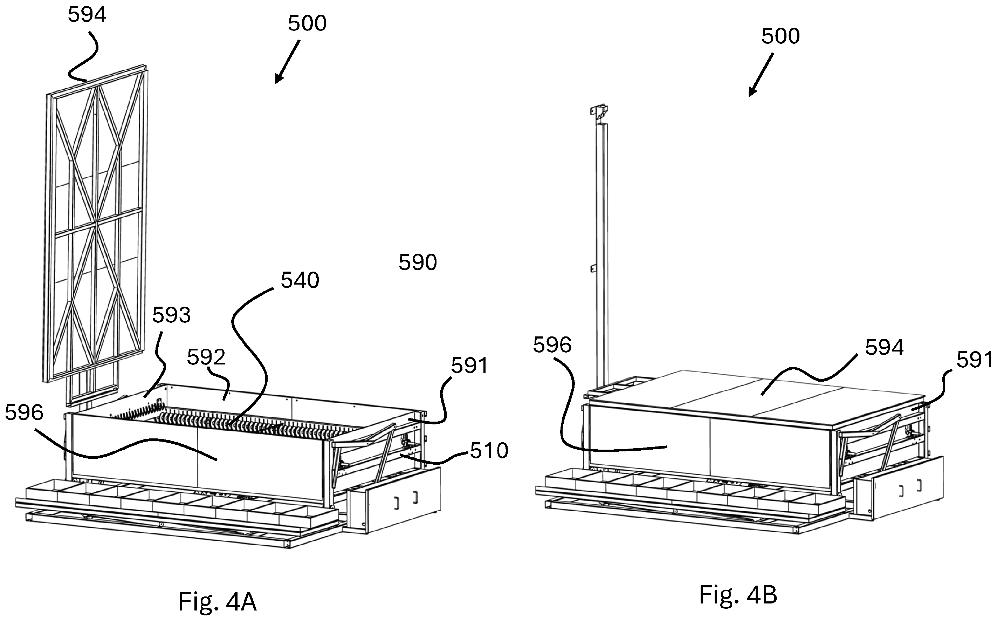

Figs. 4A-4C show schematical isometric views of an apparatus 500 according to another embodiment of the invention, similar to the embodiment shown in Fig. 3B. The apparatus 500 comprises a frame 510 and an impacting device 540 with a plurality of impacting elements as described above. Though not shown, the apparatus 400 is provided with actuators for driving movement of the impacting elements between the raised position and the lowered position.

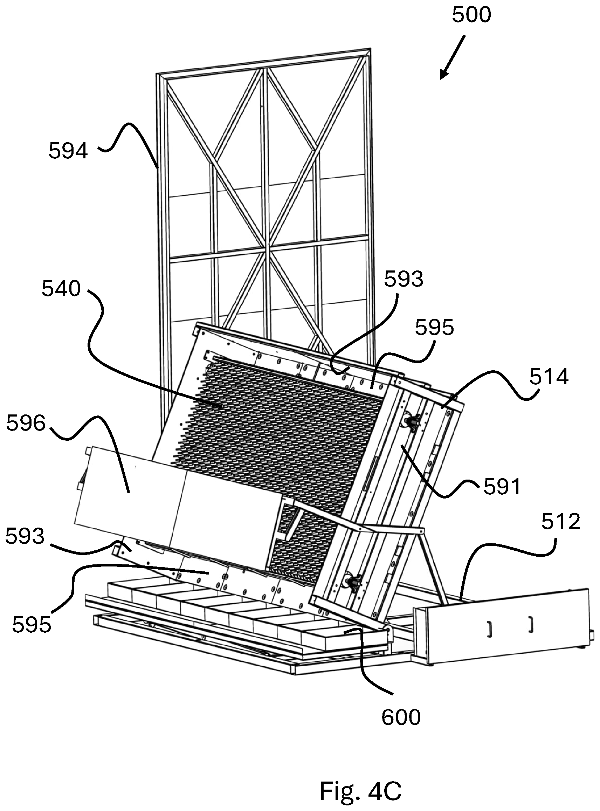

The apparatus further 500 comprises a casing that is mounted on the frame 510, the casing comprising three sidewalls 591, 592, 593 as well as a bottom wall 595, which walls are spaced around the impacting device 540 (shown in Fig. 4C). Besides the casing, the apparatus 500 is provided with a moveable top panel 594, which is moveable relative to the casing 591, 592, 593, 595 between a first position, shown in Fig. 4B, in which the top panel 594 substantially closes off an opening in the top of the casing 591, 592, 593, and a second position, shown in Fig. 4A, in which the top panel 594 substantially leaves open said opening to allow a metal sheet to be placed on the impacting device 540 through said opening. The apparatus further is provided with a moveable side panel 596. When the moveable top panel 594 is in the second position shown in Fig. 4A, a metal sheet may be placed on the impacting device while the moveable side panel 596 is in a closed position.

After the metal sheet has been placed on the impacting device, both the moveable top 594 panel and the moveable side panel 596 are placed in a second, closed position, as shown in Fig. 4B, so that these panels, together with the walls 591, 592, 593, 595 of the casing, substantially close off a volume enveloped by the casing and the panels 594, 596 to reduce noise due to impact between the impacting device 540 and the metal sheet from propagating to an area outside of the casing and panels.

After the work pieces have been separated from the metal sheet due to impact by the elongated elements of the impacting device 540, a rotatable section 514 of the frame can be rotated relative to a base section 512 of the frame, to the position shown in Fig. 4C, to allow the work pieces to fall away from the casing, in particular along the bottom wall 595 thereof and for example into collecting trays 600. An advantage of the embodiment shown in Fig. 4A - 4C, is that in the configuration shown in Fig. 4C in which the top opening is not closed off by the top panel 594, it can easily be seen whether all work pieces have fallen away from the casing. However, it will be appreciated that, in order to allow the work pieces fall out of the casing due to gravity, it suffices to move the side panel 596 to the open position shown in Fig 4C, even if in some other configuration of the invention the top opening were to remain closed.

## Claims

1. Apparatus (200; 300) for releasing work pieces from a substantially planar metal sheet (10) in which a plurality of work pieces (20, 30) have been cut in such a manner that the work pieces remain attached to a main portion of the sheet by one or more respective connecting bridge portions (22,24; 32), the apparatus comprising:
a frame (210; 310);
an impacting device (250; 350) adapted for supporting a metal sheet thereon and for simultaneously impacting several spaced apart points on a lower surface of the metal sheet, wherein the impacting device comprises a plurality of spaced apart impacting elements (251, 252; 351, 352), each impacting element comprising a plurality of protrusions, wherein each of the protrusions comprises a tip adapted for supporting thereon the lower surface (11) of the metal sheet (10), wherein the impacting elements are moveable relative to the frame (210; 310) between a raised position to impact the lower surface of the metal sheet and/or the cut work pieces with one or more of its tips from below during a rise, and a lowered position to allow released work pieces to fall downwards through the metal sheet between the tips of the protrusions of the impacting elements;
one or more actuators (280; 380, 385) adapted for driving movement of the impacting elements between the raised position and the lowered position.

2. Apparatus according to claim 1, wherein each impacting element is an elongated impacting element comprising at least 20 spaced apart tips, preferably wherein the tips are spaced apart, when seen along the longitudinal direction of the impacting element, by at least 4 cm, preferably at least 8 cm.

3. Apparatus according to claim 1 or 2, wherein the plurality of impacting elements comprises a first group of impacting elements and a second group of impacting elements, wherein the impacting device is adapted for moving the impacting elements of the first and second group between the raised position and the lowered position in an out-of-phase fashion,
preferably wherein the impacting device is adapted for placing the impacting elements of the first group in the raised position while placing the impacting elements of the second group in the lowered position.

4. Apparatus according to claim 3, wherein, when seen in projection onto a vertical plane parallel to the longitudinal direction of the impacting elements, the tips of the protrusions of the first group of impacting elements are offset with respect to the tips of the protrusions of the second group of impacting elements when the tips are arranged with their tops in a same plane.

5. Apparatus according to any one of the preceding claims, wherein, when seen in projection onto the horizontal, the protrusions of the plurality of impacting elements span an area of at least 0,5 m², preferably at least 2 m², and wherein the number of protrusions is at least 40 protrusions / m².

6. Apparatus according to any one of the preceding claims, further comprising at least one cam shaft comprising a shaft on which a plurality of cams is mounted, wherein each of the plurality of impacting elements is arranged on a corresponding cam of the plurality of cams, and wherein the cam shaft is adapted for, upon rotation thereof, imparting a reciprocating motion on the impacting elements.

7. Apparatus according to any one of the preceding claims, comprising a first cam shaft and a second cam shaft, wherein each of the first and second cam shafts comprises a shaft on which a plurality of cams is mounted, wherein each of the impacting elements is supported at a first end on a corresponding cam of the first cam shaft, and at its second end on a corresponding cam of the second cam shaft.

8. Apparatus according to any one of the preceding claims, further comprising a collection surface arranged below the plurality of impacting elements for collecting work pieces that have been released from the metal sheet.

9. Apparatus according to any one of the preceding claims, further comprising a casing, said casing being mounted on the frame and comprising one or more walls spaced around the impacting device, wherein the apparatus further comprises one or more detachable and/or moveable panels which are moveable relative to the casing between a first position in which the panels leave open one or more openings in the casing to allow a metal sheet to be placed onto the impacting device, and a second position, in which the one or more detachable and/or moveable panels substantially close off said openings to reduce noise due to impact between the impacting device and the metal sheet from propagating to an area outside of said casing and panels.

10. Apparatus according to any one of claims 1-8, further comprising a casing mounted on the frame, the casing having an upper wall and a lower wall which are connected by one or more sidewalls, wherein the plurality of impacting elements is arranged between the upper wall and the lower wall and between the one or more sidewalls,
preferably wherein the sidewalls and the upper and lower wall substantially completely enclose the plurality of impacting elements, except for at an opening through which the interior of the casing is accessible for arranging the metal sheet on the plurality of impacting elements.

11. Apparatus according to claim 10, further comprising a detachable and/or moveable panel for substantially closing off the opening.

12. Apparatus according to claim 9 or 11, wherein the casing and/or the one of more moveable and/or detachable panels are provided with a sound dampening material.

13. Apparatus according to any one of the preceding claims, wherein the frame comprises a base section and a rotatable section, wherein the rotatable section is rotatable over an angle relative to the base section between an substantially horizontal position, for letting the impacting elements be moved between the raised position to impact the metal sheet and/or work pieces from below to release work pieces from the metal sheet, and a rotated position for letting work pieces that have been released fall down and away from the plurality of impacting elements, preferably to an area that, when seen in projection onto the horizontal, is spaced apart from an area spanned by the plurality of impacting elements.

14. Apparatus according to any one of the preceding claims, wherein the impacting device is adapted for moving the impacting elements between the raised and lowered position in such a manner that during operation of the impacting device the metal sheet is caused to move relative to the frame, preferably such that the metal sheet is caused to rotate relative to the frame around at least two orthogonal axes and/or such that the metal sheet is caused to translate relative to the frame along the vertical.

15. System comprising an apparatus according to any one of the preceding claims, the system further comprising a transport device adapted for loading a metal sheet onto the plurality of impacting elements, preferably wherein the transport device is adapted for moving the metal sheet in a horizontal plane, as well as for moving the metal sheet vertically,
preferably wherein the transport device comprises manipulator comprising a plurality of spaced apart elongated elements adapted for supporting a metal sheet thereon, wherein the elongated elements are spaced such that the plurality of spaced apart elongated elements can be moved horizontally, and preferably also vertically, between the plurality of impacting elements.
